# EUROPEAN PATENT APPLICATION

(11) **EP 3 599 762 A1**
(43) Date of publication of application: **29.01.2020**
(21) Application number: 19188316.4
(22) Date of filing: 25.07.2019
(51) Int. Cl.: H04N 9/31, G03B 21/20, F21V 9/30, G02B 6/00

(54) **LIGHT SOURCE DEVICE AND PROJECTOR**

(30) Priority: 27.07.2018 JP 2018141654
(71) Applicant: Seiko Epson Corporation, Tokyo 160-8801 (JP)
(72) Inventor: Sakata, Hidefumi, Nagano, 392-8502 (JP); Suzuki, Junichi, Nagano, 392-8502 (JP)
(74) Representative: Hoffmann Eitle

(57) **Abstract**

A light source device (2) according to the present disclosure includes an excitation light source section (17) configured to emit first (E1) and second (E2) excitation lights, a first wavelength conversion section (161) including a phosphor and configured to convert the first excitation light (E1) into first light (KB) in a first wavelength band, and a second wavelength conversion section (162) including a phosphor and configured to convert the second excitation light (E2) into second light (KY) in a second wavelength band. The first wavelength conversion section (161) has first (161a) and second (161b) end surfaces, and a first side surface (161c). The second wavelength conversion section (162) has third (162a) and fourth (162b) end surfaces, and a second side surface (162c). The second end surface (161b) and the third end surface (162a) are opposed to each other, the first excitation light (E1) enters the first wavelength conversion section (161) from the first side surface (161c), the second excitation light (E2) enters the second wavelength conversion section (162) from the second side surface (162c), and the first (KB) and second (KY) lights are emitted from the first end surface (161a).

## Description

The present application is based on, and claims priority from JP Application Serial Number 2018-141654, filed July 27, 2018, the disclosure of which is hereby incorporated by reference herein in its entirety.

### BACKGROUND

### 1. Technical Field

The present disclosure relates to a light source device and a projector.

### 2. Related Art

As a light source device used for a projector, there is proposed a light source device using fluorescence emitted from a phosphor when irradiating the phosphor with excitation light emitted from a light emitting element. In International Publication No. WO 2006/054203 (Document 1), there is disclosed a light source device which is provided with a wavelength conversion member shaped like a flat plate, and a light emitting diode (LED) for emitting excitation light, and has a configuration of making the excitation light enter the wavelength conversion member from a surface large in area, and emitting the converted light from a surface small in area of the wavelength conversion member.

As described in Document 1, by making the light emitted from the LED enter a wavelength conversion member, it is possible to obtain light different in wavelength from the light emitted from the LED. When, for example, the wavelength conversion member includes a yellow phosphor, it is possible to obtain yellow light from blue light emitted from the LED. However, in order to obtain white light necessary for a light source device for a projector, it is necessary to separately provide a light source for emitting the blue light, and an optical system such as a color combining element for combining the blue light and the yellow light with each other in addition to the light source device of Document 1. As a result, there is a problem that the light source device grows in size. Further, also when obtaining colored light other than the white light, there is a problem that the light source device grows in size due to the optical system for combining the fluorescence and other colored light with each other.

### SUMMARY

A light source device according to an aspect of the present disclosure includes an excitation light source section configured to emit first excitation light and second excitation light, a first wavelength conversion section including at least a phosphor, and configured to convert the first excitation light entered the first wavelength conversion section from the excitation light source section into first light in a first wavelength band different from a wavelength band of the first excitation light, and a second wavelength conversion section including at least a phosphor, and configured to convert the second excitation light entered the second wavelength conversion section from the excitation light source section into second light in a second wavelength band different from a wavelength band of the second excitation light and the first wavelength band. The first wavelength conversion section has a first end surface and a second end surface opposed to each other, and a first side surface crossing the first end surface and the second end surface. The second wavelength conversion section has a third end surface and a fourth end surface opposed to each other, and a second side surface crossing the third end surface and the fourth end surface. The second end surface of the first wavelength conversion section and the third end surface of the second wavelength conversion section are opposed to each other, the first excitation light enters the first wavelength conversion section from the first side surface of the first wavelength conversion section, the second excitation light enters the second wavelength conversion section from the second side surface of the second wavelength conversion section, and the first light and the second light are emitted from the first end surface of the first wavelength conversion section.

In the light source device according to the aspect of the present disclosure, a peak wavelength of the first light may be shorter than a peak wavelength of the second light.

In the light source device according to the aspect of the present disclosure, the first wavelength band may be a blue wavelength band, and the second wavelength band may be a yellow wavelength band.

In the light source device according to the aspect of the present disclosure, the excitation light source section may include a first excitation light source section disposed so as to be opposed to the first side surface of the first wavelength conversion section, and configured to emit ultraviolet light as the first excitation light, and a second excitation light source section disposed so as to be opposed to the second side surface of the second wavelength conversion section, and configured to emit one of ultraviolet light, violet light and blue light as the second excitation light.

The light source device according to the aspect of the present disclosure may further include an angle conversion element which is disposed at a light exit side of the first end surface of the first wavelength conversion section, which includes a light incidence end surface and a light exit end surface, and which makes a diffusion angle in the light exit end surface smaller than a diffusion angle in the light incidence end surface.

The light source device according to the aspect of the present disclosure may further include a mirror provided to the fourth end surface of the second wavelength conversion section, and configured to reflect at least the second light.

The light source device according to the aspect of the present disclosure may further include a first dichroic mirror disposed between the second end surface of the first wavelength conversion section and the third end surface of the second wavelength conversion section, and configured to transmit the second light and reflect the first light.

In the light source device according to the aspect of the present disclosure, the first wavelength conversion section and the second wavelength conversion section may be coupled to each other via the first dichroic mirror.

The light source device according to the aspect of the present disclosure may further include a second dichroic mirror provided to the first side surface of the first wavelength conversion section, and configured to transmit the first excitation light and reflect at least the first light, and a third dichroic mirror provided to the second side surface of the second wavelength conversion section, and configured to transmit the second excitation light and reflect at least the second light.

In the light source device according to the aspect of the present disclosure, the first wavelength conversion section and the second wavelength conversion section may be formed of an integrated member.

In the light source device according to the aspect of the present disclosure, the first wavelength conversion section and the second wavelength conversion section may include a base material, a first phosphor included in the base material in the first wavelength conversion section, and configured to emit the first light, and a second phosphor included in the base material in the second wavelength conversion section, and configured to emit the second light.

In the light source device according to the aspect of the present disclosure, a dimension of the first wavelength conversion section and the second wavelength conversion section in a normal direction of the first end surface may be longer than a dimension of the first wavelength conversion section and the second wavelength conversion section in a normal direction of the side surface.

In the light source device according to the aspect of the present disclosure, the excitation light source section may include a light emitting diode.

A projector according to another aspect of the present disclosure includes the light source device according to any one of the above aspects of the present disclosure, a light modulation device configured to modulate light from the light source device in accordance with image information, and a projection optical device configured to project the light modulated by the light modulation device.

### BRIEF DESCRIPTION OF THE DRAWINGS

FIG. 1 is a schematic configuration diagram of a projector according to a first embodiment.
FIG. 2 is a schematic configuration diagram of a light source device according to the first embodiment.
FIG. 3 is a schematic configuration diagram of a light source device according to a modified example of the first embodiment.
FIG. 4 is a schematic configuration diagram of a light source device according to a second embodiment.
FIG. 5 is a schematic configuration diagram of a projector according to a third embodiment.

### DESCRIPTION OF EXEMPLARY EMBODIMENTS

### First Embodiment

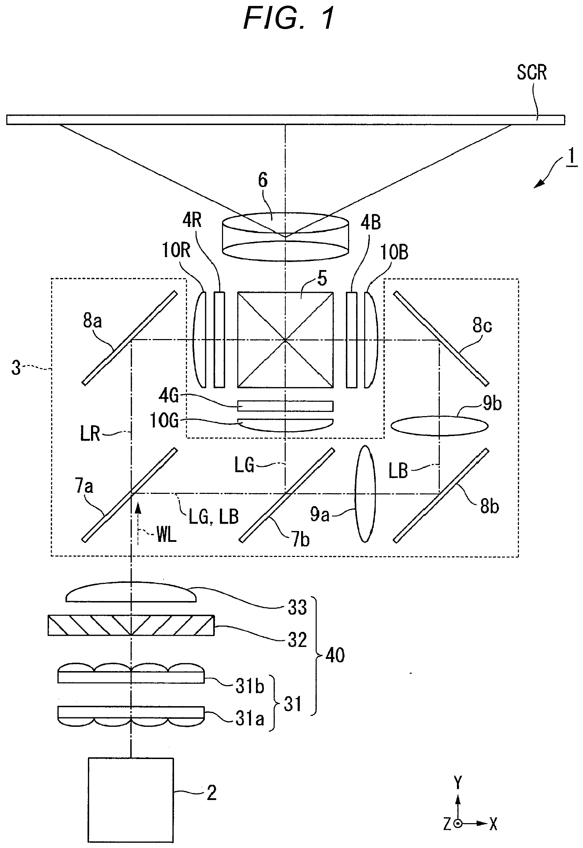

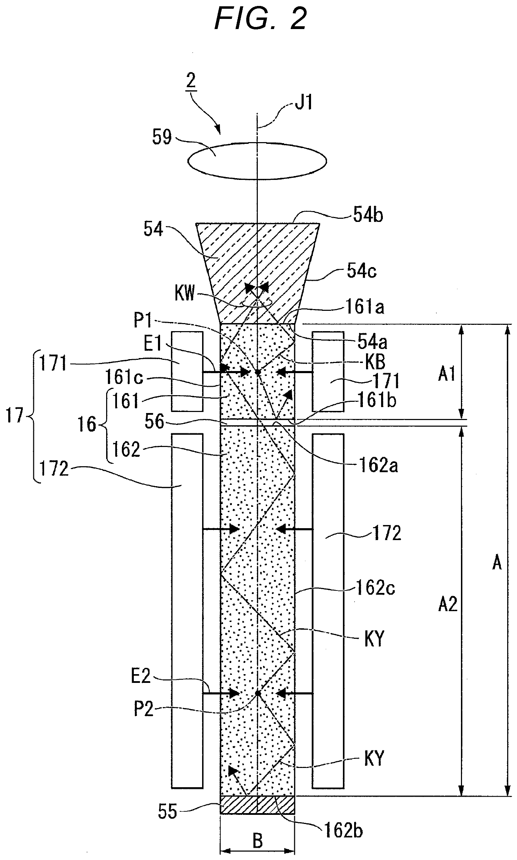

Hereinafter, a first embodiment of the present disclosure will be described using FIG. 1 and FIG. 2.

A projector according to the present embodiment is an example of a projector using liquid crystal panels as light modulation devices.

It should be noted that in each of the drawings described below, the constituents are shown with the scale ratios of respective sizes set differently between the constituents in some cases in order to facilitate the visualization of each of the constituents.

The projector 1 according to the present embodiment is a projection-type image display device for displaying a color image on a screen (a projection target surface) SCR. The projector 1 uses three light modulation devices corresponding to respective colored light, namely red light LR, green light LG and blue light LB.

As shown in FIG. 1, the projector 1 is provided with a light source device 2, a homogenous illumination optical system 40, a color separation optical system 3, a light modulation device 4R, a light modulation device 4G, a light modulation device 4B, a combining optical system 5 and a projection optical device 6.

The light source device 2 emits illumination light WL toward the homogenous illumination optical system 40. The detailed configuration of the light source device 2 will be described later in detail.

The homogenous illumination optical system 40 is provided with an integrator optical system 31, a polarization conversion element 32 and a superimposing optical system 33. The integrator optical system 31 is provided with a first lens array 31a and a second lens array 31b. The homogenous illumination optical system 40 homogenizes the intensity distribution of the illumination light WL emitted from the light source device 2 in each of the light modulation device 4R, the light modulation device 4G and the light modulation device 4B as illumination target areas. The illumination light WL having been emitted from the homogenous illumination optical system 40 enters the color separation optical system 3.

The color separation optical system 3 separates the illumination light WL as white light into the red light LR, the green light LG and the blue light LB. The color separation optical system 3 is provided with a first dichroic mirror 7a, a second dichroic mirror 7b, a first reflecting mirror 8a, a second reflecting mirror 8b, a third reflecting mirror 8c, a first relay lens 9a and a second relay lens 9b.

The first dichroic mirror 7a separates the illumination light WL from the light source device 2 into the red light LR and the other light (the green light LG and the blue light LB). The first dichroic mirror 7a transmits the red light LR thus separated from, and at the same time reflects the other light (the green light LG and the blue light LB). Meanwhile, the second dichroic mirror 7b separates the other light into the green light LG and the blue light LB. The second dichroic mirror 7b reflects the green light LG thus separated from and transmits the blue light LB.

The first reflecting mirror 8a is disposed in the light path of the red light LR, and reflects the red light LR, which has been transmitted through the first dichroic mirror 7a, toward the light modulation device 4R. Meanwhile, the second reflecting mirror 8b and the third reflecting mirror 8c are disposed in the light path of the blue light LB, and reflect the blue light LB, which has been transmitted through the second dichroic mirror 7b, toward the light modulation device 4B. Further, the green light LG is reflected by the second dichroic mirror 7b toward the light modulation device 4G.

The first relay lens 9a and the second relay lens 9b are disposed at the light exit side of the second dichroic mirror 7b in the light path of the blue light LB. The first relay lens 9a and the second relay lens 9b correct a difference in illuminance distribution of the blue light LB due to the fact that the blue light LB is longer in optical path length than the red light LR and the green light LG.

The light modulation device 4R modulates the red light LR in accordance with image information to form image light corresponding to the red light LR. The light modulation device 4G modulates the green light LG in accordance with the image information to form image light corresponding to the green light LG. The light modulation device 4B modulates the blue light LB in accordance with the image information to form image light corresponding to the blue light LB.

As the light modulation device 4R, the light modulation device 4G and the light modulation device 4B, there are used, for example, transmissive liquid crystal panels. Further, on the incident side and the exit side of the liquid crystal panel, there are disposed a pair of polarization plates (not shown), respectively, and thus, there is formed a configuration of transmitting only the linearly polarized light with a specific direction.

On the incident side of the light modulation device 4R, the light modulation device 4G and the light modulation device 4B, there are disposed a field lens 10R, a field lens 10G and a field lens 10B, respectively. The field lens 10R, the field lens 10G and the field lens 10B collimate principal rays of the red light LR, the green light LG and the blue light LB entering the light modulation device 4R, the light modulation device 4G and the light modulation device 4B, respectively.

The combining optical system 5 combines the image light corresponding to the red light LR, the image light corresponding to the green light LG and the image light corresponding to the blue light LB with each other in response to incidence of the image light respectively emitted from the light modulation device 4R, the light modulation device 4G and the light modulation device 4B, and then emits the image light thus combined toward the projection optical device 6. As the combining optical system 5, there is used, for example, a cross dichroic prism.

The projection optical device 6 is constituted by a plurality of projection lenses. The projection optical device 6 projects the image light having been combined by the combining optical system 5 toward the screen SCR in an enlarged manner. Thus, an image is displayed on the screen SCR.

The light source device 2 will hereinafter be described.

FIG. 2 is a schematic configuration diagram of the light source device 2.

As shown in FIG. 2, the light source device 2 is provided with a wavelength conversion member 16, an excitation light source section 17, an angle conversion element 54, a mirror 55, a first dichroic mirror 56 and a collimator lens 59.

The wavelength conversion member 16 has a first wavelength conversion section 161 and a second wavelength conversion section 162. The first wavelength conversion section 161 includes at least a phosphor, and converts first excitation light E1 in an excitation wavelength band into first fluorescence KB (first light) in a first wavelength band different from the excitation wavelength band. The second wavelength conversion section 162 includes at least a phosphor, and converts second excitation light E2 into second fluorescence KY (second light) in a second wavelength band different from the excitation wavelength band and the first wavelength band.

The first wavelength conversion section 161 has a quadrangular prismatic shape, and has a first end surface 161a and a second end surface 161b opposed to each other, and four side surfaces 161c crossing the first end surface 161a and the second end surface 161b. The side surfaces 161c correspond to a first side surface in the appended claims. The second wavelength conversion section 162 has a quadrangular prismatic shape, and has a third end surface 162a and a fourth end surface 162b opposed to each other, and four side surfaces 162c crossing the third end surface 162a and the fourth end surface 162b similarly to the first wavelength conversion section 161. The side surfaces 162c correspond to a second side surface in the appended claims.

The first wavelength conversion section 161 and the second wavelength conversion section 162 are bonded to each other via the first dichroic mirror 56 described later in the orientation in which the second end surface 161b of the first wavelength conversion section 161 and the third end surface 162a of the second wavelength conversion section 162 are opposed to each other. It should be noted that a central axis passing through the center of the first end surface 161a of the first wavelength conversion section 161 and the center of the fourth end surface 162b of the second wavelength conversion section 162 is defined as an optical axis J1 of the wavelength conversion member 16.

The excitation light source sections 17 have a first excitation light source section 171 and a second excitation light source section 172. The first excitation light source section 171 is disposed so as to be opposed to the side surfaces 161c of the first wavelength conversion section 161, and emits ultraviolet light as the first excitation light E1. The second excitation light source section 172 is disposed so as to be opposed to the side surfaces 162c of the second wavelength conversion section 162, and emits ultraviolet light, violet light or blue light as the second excitation light E2. In the present embodiment, the second excitation light source section 172 emits the blue light as the second excitation light E2.

It should be noted that when the ultraviolet light is used as both of the first excitation light E1 and the second excitation light E2, the excitation light source section can be integrated without being divided into the first excitation light source section and the second excitation light source section.

The first excitation light source section 171 can be disposed so as to be opposed to some of the side surfaces 161c out of the four side surfaces 161c of the first wavelength conversion section 161, or can also be disposed so as to be opposed to all of the side surfaces 161c. Similarly, the second excitation light source section 172 can be disposed so as to be opposed to some of the side surfaces 162c out of the four side surfaces 162c of the second wavelength conversion section 162, or can also be disposed so as to be opposed to all of the side surfaces 162c.

The overall dimension A of the wavelength conversion member 16 in a normal direction of the first end surface 161a is longer than the dimension B of the wavelength conversion member 16 in a normal direction of the side surface 161c which is opposed to the first excitation light source section 171. For example, the dimension A is roughly ten through several tens times as large as the dimension B. Further, the dimension A2 of the second wavelength conversion section 162 in the normal direction of the first end surface 161a is roughly four through five times as large as the dimension A1 of the first wavelength conversion section 161 in the normal direction of the first end surface 161a. Therefore, the dimension A1 of the first wavelength conversion section 161 and the dimension A2 of the second wavelength conversion section 162 in the normal direction of the first end surface 161a are longer than the dimension B of the wavelength conversion member 16 in the normal direction of the side surface 161c which is opposed to the first excitation light source section 171.

It should be noted that each of the first wavelength conversion section 161 and the second wavelength conversion section 162 is not necessarily required to have the quadrangular prismatic shape, but can also have another polygonal shape such as a triangular prism. Alternatively, it is also possible for each of the first wavelength conversion section 161 and the second wavelength conversion section 162 to have a columnar shape. When each of the first wavelength conversion section 161 and the second wavelength conversion section 162 has a columnar shape, the first wavelength conversion section 161 has a first end surface and a second end surface opposed to each other, and one side surface crossing the first end surface and the second end surface. The second wavelength conversion section 162 has a third end surface and a fourth end surface opposed to each other, and one side surface crossing the third end surface and the fourth end surface.

The first excitation light source section 171 has an LED for emitting the first excitation light E1 in the ultraviolet band. The first excitation light source section 171 is disposed so as to be opposed to the side surfaces 161c of the first wavelength conversion section 161, and emits the first excitation light E1 in a first excitation wavelength band toward the side surfaces 161c. The first excitation wavelength band is an ultraviolet wavelength band of, for example, 200 nm through 380 nm. Therefore, the first excitation light E1 is ultraviolet light. It should be noted that the first excitation wavelength band can also be a violet wavelength band of, for example, around 400 nm.

The first excitation light source section 171 has the LED for emitting the first excitation light E1 having the first excitation wavelength band in the ultraviolet band, but can also have other optical members such as a light guide plate, a diffusion plate, and a lens besides the LED. The number of the LED is not particularly limited.

The first wavelength conversion section 161 is formed of, for example, fluorescent glass obtained by dispersing rare-earth ions in the glass, or a material obtained by dispersing blue phosphor in a binder such as glass or resin. Specifically, as the fluorescent glass, there is used Lumilass (a trade name; made by Sumita Optical Glass, Inc.) or the like. As the blue phosphor, there is used, for example, BaMgAl₁₀O₁₇:Eu(II). The first wavelength conversion section 161 converts the first excitation light E1 in the first excitation wavelength band into the first fluorescence KB (the blue light) in the first wavelength band.

The second excitation light source section 172 has an LED for emitting the second excitation light E2 in the blue band. The second excitation light source section 172 is disposed so as to be opposed to the side surfaces 162c of the second wavelength conversion section 162, and emits the second excitation light E2 in a second excitation wavelength band toward the side surfaces 162c. The second excitation wavelength band is a blue wavelength band of, for example, 450 nm through 495 nm. Therefore, the second excitation light E2 is the blue light.

The second wavelength conversion section 162 is formed of a ceramic phosphor (polycrystalline phosphor) for converting the wavelength of the second excitation light E2 into the wavelength of the second fluorescence KY in the second wavelength band. The second wavelength band is a yellow wavelength band of, for example, 490 through 750 nm. Therefore, the peak wavelength of the fluorescence KY in the second wavelength band is longer than the peak wavelength of the fluorescence KB in the first wavelength band.

The second wavelength conversion section 162 can also be formed of a single-crystal phosphor instead of the polycrystalline phosphor. Alternatively, the second wavelength conversion section 162 can also be formed of fluorescent glass. Alternatively, the second wavelength conversion section 162 can also be formed of a material obtained by dispersing a number of phosphor particles in a binder made of glass or resin.

The second wavelength conversion section 162 is formed of, for example, an yttrium aluminum garnet (YAG) phosphor. Citing YAG:Ce including cerium (Ce) as an activator agent as an example, as the material of the second wavelength conversion section 162, there can be used a material obtained by mixing raw powder including constituent elements such as Y₂O₃, Al₂O₃ and CeO₃ to cause the solid-phase reaction, Y-Al-O amorphous particles obtained by a wet process such as a coprecipitation process or a sol-gel process, and YAG particles obtained by a gas-phase process such as a spray drying process, a flame heat decomposition process or a thermal plasma process.

In the wavelength conversion member 16 having the above configuration, the first excitation light E1 and the second excitation light E2 emitted from the excitation light source section 17 enter the wavelength conversion member 16 from the side surfaces 161c of the first wavelength conversion section 161 and the side surfaces 162c of the second wavelength conversion section 162. Specifically, the first excitation light E1 emitted from the first excitation light source section 171 enters the first wavelength conversion section 161 from the side surfaces 161c of the first wavelength conversion section 161. The second excitation light E2 emitted from the second excitation light source section 172 enters the second wavelength conversion section 162 from the side surfaces 162c of the second wavelength conversion section 162.

Further, since the mirror 55 described later is disposed on the second end surface 162b of the second wavelength conversion section 162, the first fluorescence KB and the second fluorescence KY are emitted from the first end surface 161a of the first wavelength conversion section 161. The first fluorescence KB and the second fluorescence KY are combined with each other inside the first wavelength conversion section 161, and are emitted as white composite light KW.

The angle conversion element 54 is disposed at the light exit side of the first end surface 161a of the first wavelength conversion section 161. The angle conversion element 54 is formed of a taper rod having a light incidence end surface 54a which the composite light KW enters, and a light exit end surface 54b from which the composite light KW is emitted. The angle conversion element 54 has a truncated quadrangular pyramid shape, and the cross-sectional area perpendicular to the optical axis J1 increases along the proceeding direction of the light, and the area of the light exit end surface 54b is larger than the area of the light incidence end surface 54a. Thus, the composite light KW changes the angle to the direction parallel to the optical axis J1 every time the composite light KW is totally reflected by side surfaces 54c while proceeding inside the angle conversion element 54. In such a manner, the angle conversion element 54 makes the diffusion angle of the composite light KW in the light exit end surface 54b smaller than the diffusion angle of the composite light KW in the light incidence end surface 54a.

The angle conversion element 54 is fixed to the wavelength conversion member 16 with an optical adhesive (not shown) so that the light incidence end surface 54a is opposed to the first end surface 161a of the first wavelength conversion section 161. Specifically, the angle conversion element 54 and the wavelength conversion member 16 have contact with each other via the optical adhesive, and no air gap (no air layer) is disposed between the angle conversion element 54 and the wavelength conversion member 16. It should be noted that the angle conversion element 54 can also be fixed so as to have direct contact with the wavelength conversion member 16 by, for example, an arbitrary support member. In any case, it is desirable not to provide an air gap between the angle conversion element 54 and the wavelength conversion member 16. It is desirable to make the refractive index of the angle conversion element 54 and the refractive index of the wavelength conversion member 16 coincide with each other as precise as possible.

It should be noted that it is also possible to use a compound parabolic concentrator (CPC) as the angle conversion element 54 instead of the taper rod. When using the CPC as the angle conversion element 54, substantially the same advantages as those when using the taper rod can be obtained.

The mirror 55 is disposed on the fourth end surface 162b of the second wavelength conversion section 162. The mirror 55 reflects at least the second fluorescence KY which has been guided inside the second wavelength conversion section 162 and has reached the fourth end surface 162b. Further, when there exists the first fluorescence KB which has been guided inside the second wavelength conversion section 162, and has reached the fourth end surface 162b, it is also possible for the mirror 55 to reflect the first fluorescence KB in addition to the second fluorescence KY. The mirror 55 is formed of a metal film or a dielectric multilayer film formed on the fourth end surface 162b of the second wavelength conversion section 162.

The first dichroic mirror 56 is disposed between the second end surface 161b of the first wavelength conversion section 161 and the third end surface 162a of the second wavelength conversion section 162. The first wavelength conversion section 161 and the second wavelength conversion section 162 are coupled to each other via the first dichroic mirror 56. The first dichroic mirror 56 transmits the second fluorescence KY having been generated inside the second wavelength conversion section 162, and at the same time, reflects the first fluorescence KB having been generated inside the first wavelength conversion section 161. The first dichroic mirror 56 is formed of a dielectric multilayer film formed on the second end surface 161b of the first wavelength conversion section 161 or the third end surface 162a of the second wavelength conversion section 162.

The collimator lens 59 is disposed at the light exit side of the light exit end surface 54b of the angle conversion element 54. The collimator lens 59 collimates the composite light KW emitted from the angle conversion element 54. Therefore, parallelism of the composite light KW the angle distribution of which is converted by the angle conversion element 54 is further improved by the collimator lens 59. The collimator lens 59 is formed of a convex lens. It should be noted that when sufficient parallelism is obtained by the angle conversion element 54 alone, it is not necessarily required to provide the collimator lens 59.

Hereinafter, the behavior of the light in the light source device 2 having the configuration described above will be described.

When the first excitation light E1 having been emitted from the first excitation light source section 171 enters the first wavelength conversion section 161, the phosphor included in the first wavelength conversion section 161 is excited, and the first fluorescence KB is emitted from an arbitrary light emitting point P1. The first fluorescence KB proceeds from the arbitrary light emitting point P1 toward all directions, but the first fluorescence KB proceeding toward the side surfaces 161c proceeds toward the first end surface 161a or the second end surface 161b while repeating the total reflection by the side surfaces 161c. The first fluorescence KB having proceeded toward the first end surface 161a enters the angle conversion element 54. Meanwhile, the first fluorescence KB having proceeded toward the second end surface 161b is reflected by the first dichroic mirror 56, and then proceeds toward the first end surface 161a.

It should be noted that it is desirable for the first dichroic mirror 56 to have a characteristic of reflecting the first excitation light E1 together with the first fluorescence KB so that the first excitation light E1 which has not been used for the excitation of the phosphor out of the first excitation light E1 having entered the first wavelength conversion section 161 does not enter the second wavelength conversion section 162. Further, it is also possible to dispose a dichroic mirror having a characteristic of transmitting the first fluorescence KB and the second fluorescence KY, and at the same time reflecting the first excitation light E1 between the first wavelength conversion section 161 and the angle conversion element 54 so that the first excitation light E1 having not been used for the excitation of the phosphor does not enter the angle conversion element 54.

When the second excitation light E2 having been emitted from the first excitation light source section 172 enters the second wavelength conversion section 162, the phosphor included in the second wavelength conversion section 162 is excited, and the second fluorescence KY is emitted from an arbitrary light emitting point P2. The second fluorescence KY proceeds from the arbitrary light emitting point P2 toward all directions, but the second fluorescence KY proceeding toward the side surfaces 162c proceeds toward the third end surface 162a or the fourth end surface 162b while repeating the total reflection by the side surfaces 162c. The second fluorescence KY having proceeded toward the third end surface 162a is transmitted through the first dichroic mirror 56, and then enters the first wavelength conversion section 161. Meanwhile, the second fluorescence KY having proceeded toward the fourth end surface 162b is reflected by the mirror 55, then proceeds toward the third end surface 162a, and then enters the first wavelength conversion section 161 proceeding along substantially the same path as the second fluorescence KY having originally proceeded toward the third end surface 162a.

It should be noted that it is desirable for the first dichroic mirror 56 to have a characteristic of reflecting the second excitation light E2 together with the first fluorescence KB so that the second excitation light E2 which has not been used for the excitation of the phosphor out of the second excitation light E2 having entered the second wavelength conversion section 162 does not enter the first wavelength conversion section 161.

The second fluorescence KY having entered the first wavelength conversion section 161 is guided inside the first wavelength conversion section 161, and thus, the white composite light KW including the first fluorescence KB as the blue light and the second fluorescence KY as the yellow light is emitted from the first end surface 161a of the first wavelength conversion section 161. The composite light KW having been emitted from the wavelength conversion member 16 is collimated by the angle conversion element 54 and the collimator lens 59, and is then emitted from the light source device 2. The composite light KW (the illumination light WL) having been emitted from the light source device 2 proceeds toward the integrator optical system 31 as shown in FIG. 1.

In the light source device 2 according to the present embodiment, the excitation light source section 17 for emitting the first excitation light E1 and the second excitation light E2 is disposed so as to be opposed to the side surfaces 161c, 162c of the wavelength conversion member 16, and the first fluorescence KB (the blue light) from the first wavelength conversion section and the second fluorescence KY (the yellow light) from the second wavelength conversion section 162 are emitted from the wavelength conversion member 16 in the state in which the first fluorescence KB and the second fluorescence KY are combined with each other. Thus, it is possible to realize the light source device 2 which is compact and is capable of emitting the white light.

In general, the light emitted from the LED is larger in diffusion angle compared to the light emitted form the semiconductor laser. Therefore, the light source using the LED is large in etendue determined by the product of the light emitting area of the light source and the solid angle of the light from the light source compared to the light source using the semiconductor laser. The increase in etendue of the light source device increases the light which cannot be taken by the optical system in the posterior stage of the light source device to cause deterioration of the light use efficiency as the projector. Therefore, when used as the light source device for the projector, it is desirable for the etendue to be as small as possible.

From that point of view, in the case of the present embodiment, the excitation light source section 17 is formed of the LED, and the excitation light E1, E2 large in diffusion angle from the LED enters the wavelength conversion sections 161, 162 from the side surfaces 161c, 162c large in area, respectively. Meanwhile, the first fluorescence KB and the second fluorescence KY respectively generated inside the wavelength conversion sections 161, 162 are emitted from the first end surface 161a sufficiently smaller in area compared to the side surfaces 161c, 162c. Since the substantive light emission area of the wavelength conversion member 16 corresponds to the area of the first end surface 161a, the light emission area is equivalently contracted due to the configuration of the present embodiment. As described above, according to the present embodiment, it is possible to realize the light source device 2 small in etendue, and by using this light source device 2 in the projector 1, the light use efficiency can be improved.

In the case of the present embodiment, since the first fluorescence KB as the blue light is emitted from the first wavelength conversion section 161, the second fluorescence KY as the yellow light is emitted from the second wavelength conversion section 162, and the white light is obtained by combining the first fluorescence KB and the second fluorescence KY with each other, it is possible to adjust the white balance of the white light by adjusting the balance between the light intensity of the first fluorescence KB and the light intensity of the second fluorescence KY. As a specific adjustment method of the white balance, it is also possible to adopt a configuration in which, for example, the light source device 2 is provided with sensors for detecting the light intensities of the first fluorescence KB and the second fluorescence KY, and the electrical power to be supplied to the first excitation light source section 171 or the second excitation light source section 172 is appropriately controlled in accordance with the deviations of the respective light intensities detected by the sensors from a standard value.

In the light source device 2 related to the present embodiment, since the angle conversion element 54 is disposed at the light exit side of the wavelength conversion member 16, it is possible to collimate the composite light KW emitted from the wavelength conversion member 16. Further, since the collimator lens 59 is disposed at the light exit side of the angle conversion element 54, it is possible to further improve the parallelism of the composite light KW. Thus, it is possible to improve the light use efficiency in the optical system in the posterior stage of the light source device 2.

In the light source device 2 according to the present embodiment, since the mirror 55 is provided to the fourth end surface 162b of the second wavelength conversion section 162, the second fluorescence KY emitted inside the second wavelength conversion section 162 is prevented from being emitted from the fourth end surface 162b. Further, the second excitation light E2 which has not been used for the excitation of the phosphor is also prevented from being leaked outside the wavelength conversion member 16 from the fourth end surface 162b. Thus, it is possible to improve the use efficiency of the second fluorescence KY and the second excitation light E2.

In the light source device 2 according to the present embodiment, since the first dichroic mirror 56 is disposed between the first wavelength conversion section 161 and the second wavelength conversion section 162, it is prevented that the first fluorescence KB emitted inside the first wavelength conversion section 161 enters the second wavelength conversion section 162, and is consumed as the excitation light for the second wavelength conversion section 162. Thus, it is possible to improve the use efficiency of the first fluorescence KB as the illumination light.

The projector 1 according to the present embodiment is equipped with the light source device 2 described above, and is therefore excellent in light use efficiency, and at the same time, reduction in size can be achieved.

### Modified Examples

In the light source device 2 according to the present embodiment, it is also possible to provide dichroic mirrors to the side surfaces of each of the wavelength conversion sections.

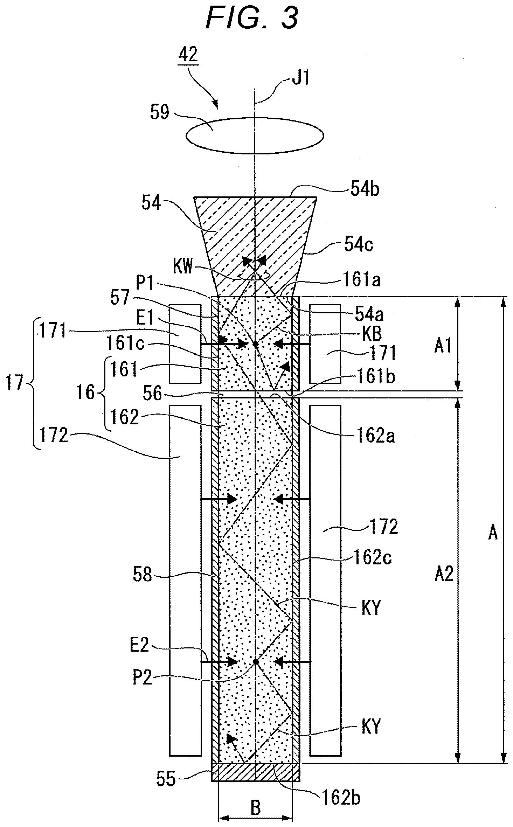

FIG. 3 is a schematic configuration diagram of a light source device 42 according to a modified example of the first embodiment.

In FIG. 3, the constituents common to those shown in FIG. 2 are denoted by the same reference numerals, and the description thereof will be omitted.

As shown in FIG. 3, the light source device 42 according to the modified example is further provided with second dichroic mirrors 57 and third dichroic mirrors 58.

The second dichroic mirrors 57 are respectively provided to the four side surfaces 161c of the first wavelength conversion section 161. The second dichroic mirrors 57 transmit the first excitation light E1 emitted from the first excitation light source section 171, and at the same time reflect at least the first fluorescence KB generated inside the first wavelength conversion section 161. It is desirable for the second dichroic mirrors 57 to transmit the first excitation light E1, and at the same time reflect the second fluorescence KY generated inside the second wavelength conversion section 162 in addition to the first fluorescence KB. The second dichroic mirrors 57 are each constituted by a dielectric multilayer film formed on each of the side surfaces 161c of the first wavelength conversion section 161.

The third dichroic mirrors 58 are respectively provided to the four side surfaces 162c of the second wavelength conversion section 162. The third dichroic mirrors 58 transmit the second excitation light E2 emitted from the second excitation light source section 172, and at the same time reflect at least the second fluorescence KY generated inside the second wavelength conversion section 162. The third dichroic mirrors 58 are each constituted by a dielectric multilayer film formed on each of the side surfaces 162c of the second wavelength conversion section 162.

In the light source device 2 according to the present embodiment, since the second dichroic mirrors 57 are provided to the side surfaces 161c of the first wavelength conversion section 161, the first fluorescence KB emitted inside the first wavelength conversion section 161 is prevented from being emitted from the side surfaces 161c. Further, since the third dichroic mirrors 58 are provided to the side surfaces 162c of the second wavelength conversion section 162, the second fluorescence KY emitted inside the second wavelength conversion section 162 is prevented from being emitted from the side surfaces 162c. Thus, it is possible to improve the use efficiency of the first fluorescence KB and the second fluorescence KY.

### Second Embodiment

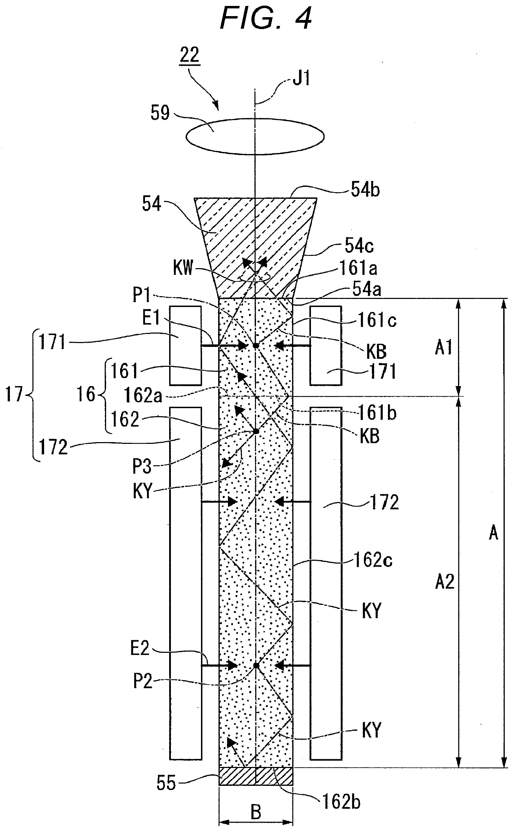

Hereinafter, a second embodiment of the present disclosure will be described using FIG. 4.

A light source device according to the second embodiment is substantially the same in basic configuration as that of the first embodiment, but is different from that of the first embodiment in the point that the first dichroic mirror is not provided. Therefore, the description of the overall configuration of the light source device will be omitted.

FIG. 4 is a schematic configuration diagram of the light source device 22 according to the second embodiment.

In FIG. 4, the constituents common to those shown in FIG. 2 are denoted by the same reference numerals, and the description thereof will be omitted.

As shown in FIG. 4, the light source device 22 is provided with the wavelength conversion member 16, the excitation light source section 17, the angle conversion element 54, the mirror 55 and the collimator lens 59. Specifically, in the light source device 22 according to the second embodiment unlike the light source device 2 according to the first embodiment, the first wavelength conversion section 161 and the second wavelength conversion section 162 have direct contact with each other, and the first dichroic mirror 56 is not disposed between the first wavelength conversion section 161 and the second wavelength conversion section 162.

In the first embodiment, the first dichroic mirror 56 intervenes between the first wavelength conversion section 161 and the second wavelength conversion section 162, and thus the first wavelength conversion section 161 and the second wavelength conversion section 162 are members separated from each other. In contrast, in the second embodiment, the first wavelength conversion section 161 and the second wavelength conversion section 162 are formed of an integrated member. Specifically, there is adopted a configuration in which the first wavelength conversion section 161 and the second wavelength conversion 162 are separately formed by disposing an area in which phosphor particles for emitting the first fluorescence are introduced, and an area in which phosphor particles for emitting the second fluorescence are introduced inside the binder. Therefore, the wavelength conversion member 16 in the second embodiment has a base material, a first phosphor which is included by the base material in the first wavelength conversion section 161 and emits the first fluorescence KB, and a second phosphor which is included in the base material in the second wavelength conversion section 162 and emits the second fluorescence KY. The rest of the configuration of the light source device 22 is substantially the same as in the first embodiment.

The behavior of the light in the light source device 22 according to the second embodiment is also substantially the same as that of the light source device 2 according to the first embodiment. It should be noted that in the case of the light source device 22 according to the second embodiment, since the first dichroic mirror 56 is not disposed between the first wavelength conversion section 161 and the second wavelength conversion section 162, the first fluorescence KB emitted inside the first wavelength conversion section 161 enters the second wavelength conversion section 162, and functions as the excitation light for the second wavelength conversion section 162. As shown in FIG. 3, when the first fluorescence KB emitted from the first wavelength conversion section 161 enters the second wavelength conversion section 162, the phosphor included in the second wavelength conversion section 162 is excited, and the second fluorescence KY is emitted from an arbitrary light emitting point P3.

Therefore, in the light source device 22 according to the second embodiment, in order to ensure the white balance equivalent to that in the first embodiment, it is desirable for the input power to each of the excitation light source sections 171, 172 or the length of each of the wavelength conversion sections 161, 162 to be set so that the light intensity of the first fluorescence KB becomes higher compared to the light intensity of the first fluorescence KB in the light source device according to the first embodiment in expectation of an amount of the first fluorescence KB to be consumed as the excitation light for the second wavelength conversion section 162.

Also in the second embodiment, it is possible to obtain substantially the same advantages as in the first embodiment such as the advantage that it is possible to realize the compact light source device 22 for emitting the white light, and the advantage that it is possible to realize the light source device 22 small in etendue.

### Third Embodiment

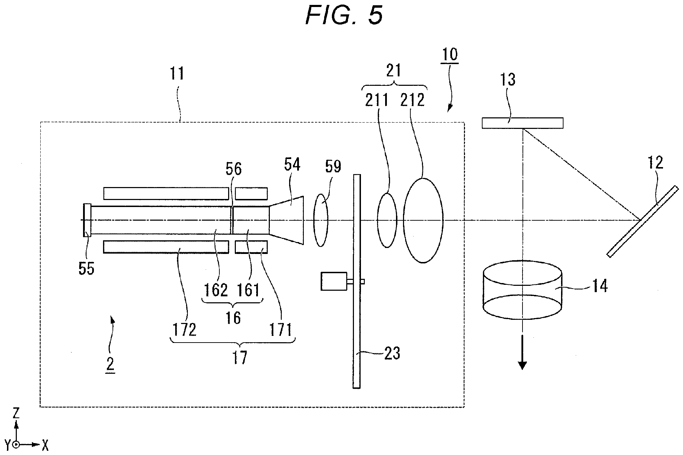

A third embodiment of the present disclosure will hereinafter be described using FIG. 5.

There is cited the example of the liquid crystal projector in the first embodiment, but in the third embodiment, the description will be presented citing an example of a projector equipped with a micromirror type light modulation device.

FIG. 5 is a schematic configuration diagram of the projector according to the third embodiment.

As shown in FIG. 5, the projector 10 according to the third embodiment is provided with an illumination device 11, a light guide optical system 12, a micromirror type light modulation device 13 and a projection optical device 14. The illumination device 11 is provided with the light source device 2, a color wheel 23 and a pickup optical system 21.

In the third embodiment, the light source device 2 according to the first embodiment is used as the light source device. Therefore, in the third embodiment, the description of the light source device 2 will be omitted. It should be noted that it is also possible to use the light source device 22 according to the second embodiment instead of the light source device 2.

The color wheel 23 has a configuration in which color filters corresponding respectively to three colors of red, green and blue are disposed on a rotatable substrate along the circumferential direction of a rotary shaft. By the composite light KW emitted from the light source device 2 passing through the color wheel rotating at high speed, red light, green light and blue light are emitted from the color wheel 23 in a time-sharing manner.

In the case of the present embodiment, it is also possible to generate the red light, the green light and the blue light in a time-sharing manner using a configuration in which the first excitation light source section 171 and the second excitation light source section 172 are alternately made to emit light in a time-sharing manner, the yellow light emitted from the light source device 2 when the second excitation light source section 172 emits light is temporally divided into the red light and the green light using the color wheel 23, and the blue light emitted from the light source device 2 when the first excitation light source section 171 emits light is emitted in a different period from those of the red light and the green light although the configuration of the light source device 2 is substantially the same as in the first embodiment.

Alternatively, it is also possible to generate the red light, the green light and the blue light in a time-sharing manner using a configuration in which the first excitation light source section 171 and the second excitation light source 172 are made to emit light at the same time, and the white light emitted from the light source device 2 is temporally divided using the color wheel 23.

The pickup optical system 21 is constituted by a first convex lens 211 and a second convex lens 212. The red light, the green light and the blue light emitted from the color wheel are transmitted to the light guide optical system 12 by the pickup optical system 21.

The light guide optical system 12 is formed of a reflecting mirror. The light guide optical system 12 reflects the red light, the green light and the blue light emitted from the light source device 2 to make the red light, the green light and the blue light enter the light modulation device 13 in a time-sharing manner.

As the micromirror type light modulation device 13, there is used, for example, a Digital Micromirror Device (DMD) . The DMD has a configuration having a plurality of micromirrors arranged in a matrix. The DMD switches the tilt directions of the plurality of micromirrors to thereby switch the reflection direction of the incident light at high speed between the direction in which the incident light enters the projection optical device 14 and the direction in which the incident light fails to enter the projection optical device 14. As described above, the light modulation device 13 sequentially modulates the red light LR, the green light LG and the blue light LB having been emitted from the light source device 2 to generate a red image, a green image and a blue image.

The projection optical device 14 projects the red image, the green image and the blue image on a screen. The projection optical device 14 is constituted by, for example, a plurality of projection lenses.

The projector 10 according to the present embodiment is equipped with the light source device 2 according to the first embodiment, and is therefore excellent in light use efficiency, and at the same time, reduction in size can be achieved.

It should be noted that the scope of the present disclosure is not limited to the embodiments described above, but a variety of modifications can be provided thereto within the scope or the spirit of the present disclosure.

For example, there is cited the example in which the second wavelength conversion section includes the phosphor for emitting the yellow fluorescence in the embodiments described above, it is also possible for the second wavelength conversion section to include two types of phosphor constituted by a phosphor for emitting the green fluorescence and a phosphor for emitting the red fluorescence. In that case, it is possible for the two types of phosphor to be homogenously mixed inside the wavelength conversion member, or to be eccentrically located in separate areas.

Although in the embodiments described above, there is cited the example of the light source device for emitting the white light, the present disclosure can also be applied to a light source device for emitting other colored light than the white light. For example, it is also possible to configure a light source device which is provided with a wavelength conversion member for emitting green fluorescence, and a second light source section for emitting red light, and emits yellow light. Even in that case, according to the present disclosure, it is possible to realize a compact light source device for emitting the yellow light.

Further, the specific configurations such as the shape, the number, the arrangement, the material of each of the constituents constituting the light source device are not limited to those of the embodiments described above, but can arbitrarily be modified.

Although in the first embodiment described above, there is described an example when applying the present disclosure to the transmissive liquid crystal projector, it is also possible to apply the present disclosure to a reflective projector. Here, "transmissive" denotes that the liquid crystal light valve including the liquid crystal panel and so on has a configuration of transmitting the light. The term "reflective" denotes that the liquid crystal light valve has a configuration of reflecting the light.

Although in the first embodiment described above, there is cited the example of the projector using three liquid crystal panels, the present disclosure can also be applied to a projector using one liquid crystal light valve alone or a projector using four or more liquid crystal light valves.

Although in the embodiments described above, there is described the example of installing the light source device according to the present disclosure in the projector, this is not a limitation. The light source device according to the present disclosure can also be applied to lighting equipment, a headlight of a vehicle, and so on.

## Claims

1. A light source device comprising:
an excitation light source section configured to emit first excitation light and second excitation light;
a first wavelength conversion section including at least a phosphor, and configured to convert the first excitation light entered the first wavelength conversion section from the excitation light source section into first light in a first wavelength band different from a wavelength band of the first excitation light; and
a second wavelength conversion section including at least a phosphor, and configured to convert the second excitation light entered the second wavelength conversion section from the excitation light source section into second light in a second wavelength band different from a wavelength band of the second excitation light and the first wavelength band, wherein
the first wavelength conversion section has a first end surface and a second end surface opposed to each other, and a first side surface crossing the first end surface and the second end surface,
the second wavelength conversion section has a third end surface and a fourth end surface opposed to each other, and a second side surface crossing the third end surface and the fourth end surface,
the second end surface of the first wavelength conversion section and the third end surface of the second wavelength conversion section are opposed to each other,
the first excitation light enters the first wavelength conversion section from the first side surface of the first wavelength conversion section,
the second excitation light enters the second wavelength conversion section from the second side surface of the second wavelength conversion section, and
the first light and the second light are emitted from the first end surface of the first wavelength conversion section.

2. The light source device according to Claim 1, wherein a peak wavelength of the first light is shorter than a peak wavelength of the second light.

3. The light source device according to Claim 1 or 2, wherein
the first wavelength band is a blue wavelength band, and
the second wavelength band is a yellow wavelength band.

4. The light source device according to any one of the preceding claims, wherein
the excitation light source section includes
a first excitation light source section disposed so as to be opposed to the first side surface of the first wavelength conversion section, and configured to emit ultraviolet light as the first excitation light, and
a second excitation light source section disposed so as to be opposed to the second side surface of the second wavelength conversion section, and configured to emit one of ultraviolet light, violet light and blue light as the second excitation light.

5. The light source device according to any one of the preceding claims, further comprising:
an angle conversion element which is disposed at a light exit side of the first end surface of the first wavelength conversion section, which includes an light incidence end surface and a light exit end surface, and which makes a diffusion angle in the light exit end surface smaller than a diffusion angle in the light incidence end surface.

6. The light source device according to any one of the preceding claims, further comprising:
a mirror provided to the fourth end surface of the second wavelength conversion section, and configured to reflect at least the second light.

7. The light source device according to any one of the preceding claims, further comprising:
a first dichroic mirror disposed between the second end surface of the first wavelength conversion section and the third end surface of the second wavelength conversion section, and configured to transmit the second light and reflect the first light.

8. The light source device according to Claim 7, wherein
the first wavelength conversion section and the second wavelength conversion section are coupled to each other via the first dichroic mirror.

9. The light source device according to any one of the preceding claims, further comprising:
a second dichroic mirror provided to the first side surface of the first wavelength conversion section, and configured to transmit the first excitation light and reflect at least the first light; and
a third dichroic mirror provided to the second side surface of the second wavelength conversion section, and configured to transmit the second excitation light and reflect at least the second light.

10. The light source device according to any one of the preceding claims, wherein
the first wavelength conversion section and the second wavelength conversion section are formed of an integrated member.

11. The light source device according to Claim 10, wherein
the first wavelength conversion section and the second wavelength conversion section include
a base material,
a first phosphor included in the base material in the first wavelength conversion section, and configured to emit the first light, and
a second phosphor included in the base material in the second wavelength conversion section, and configured to emit the second light.

12. The light source device according to any one of the preceding claims, wherein
a dimension of the first wavelength conversion section and the second wavelength conversion section in a normal direction of the first end surface is longer than a dimension of the first wavelength conversion section and the second wavelength conversion section in a normal direction of the side surface.

13. The light source device according to Claim 12, wherein
the excitation light source section includes a light emitting diode.

14. A projector comprising:
the light source device according to any one of the preceding claims;
a light modulation device configured to modulate light from the light source device in accordance with image information; and
a projection optical device configured to project the light modulated by the light modulation device.
